# EUROPEAN PATENT SPECIFICATION

(11) **EP 0 954 220 B1**
(45) Date of publication and mention of the grant of the patent: **24.04.2002**
(21) Application number: 97950507.0
(22) Date of filing: 18.12.1997
(51) Int. Cl.: A01K 5/00, A01F 29/00, A01F 25/20

(54) **SHREDDING APPARATUS WITH TILTABLE LOADING MECHANISM**
ZERKLEINERVORRICHTUNG MIT SCHWENKBAREM AUFNAHMEMECHANISMUS
APPAREIL A DECHIQUETER DOTE D'UN MECANISME DE CHARGEMENT A BASCULE

(30) Priority: 18.12.1996 NL 1004809
(43) Date of publication of application: 10.11.1999
(73) Proprietor: PEETERS LANDBOUWMACHINES B.V., 4885 JH Achtmaal (NL)
(72) Inventor: PEETERS, Daniel, Petrus, Marie, NL-4885 AW Achtmaal (NL)
(74) Representative: Dorna, Peter
(86) International application number: NL9700712
(87) International publication number: WO9826651

(56) References cited:
- EP-A- 0 706 755
- DE-A- 3 815 229
- GB-A- 2 122 480
- GB-A- 2 243 593
- NL-A- 7 501 343

## Description

The invention relates to an apparatus for shredding bales of material, provided with a container with at least one shredding member arranged therein for rotation on a standing shaft and loading means driven by drive means and tiltable between a receiving position and a delivery position for loading the container with the bales.

Such an apparatus is known from the European patent specification 0 706 755 and is for instance used for shredding winter fodder for cattle which is available in the form of blocks or bales of silage.

Conventional shredding apparatuses had a container or tub into which the block or bale of silage was placed and in which a rotatable auger with serrated knives was arranged. The rotating auger was herein generally placed in the vicinity of a discharge opening of the tub and was rotatable on a lying shaft. One portion of the bale of material at a time was thus cut away by this rotating auger with the knives and simultaneously carried outside through the discharge opening in the tub, whereafter the shredded fodder cut from the bale was discharged. For this purpose a belt conveyor was generally present which ran parallel to the auger. The known apparatus could, when a bale of silage was placed therein, be coupled behind a tractor, whereafter the apparatus was driven past feed-troughs for cattle. The bale of silage was herein gradually shredded by the auger with the knives and the shredded silage was thrown onto the discharge conveyor by the auger and thereby transported to the feed-troughs.

The known apparatus was particularly suitable for blocks of silage and, with the use of bales of silage such as are being used increasingly in recent years, it had the drawback that the auger rotatable on a lying shaft and arranged close to the bottom of the container in a corner thereof hardly comes into engagement with the bale when it is lying on the bottom of the container as a result of the cylindrical shape of the bale.

An improved apparatus of the above described type is therefore proposed in the above mentioned European patent specification 0 706 755, wherein the shredding members are each rotatable on a standing shaft and the loading means are adapted to perform a tilting movement between a receiving position and a delivery position. By making use of a shredding member rotatable on a standing shaft a good shredding action is always obtained, also when cylindrical bales are used. The apparatus can moreover be loaded in simple manner through the use of tiltable loading means.

The apparatus known from said patent specification comprises a container which is arranged on a mobile chassis and in which two standing rotors are arranged mutually adjacently. A part of the rear wall of the container is pivotable on a lying shaft and thus functions as loading flap. The bales of fodder to be shredded or mixed are thus placed on the loading flap when it is pivoted downward, whereafter the loading flap is pivoted upward and the bale or bales of material are tilted into the container. Because the pivot point of the loading flap is situated at the height of the bottom of the container, the bale of material is also introduced into the container at the height of the bottom. In an alternative embodiment of the apparatus as described in this European patent specification the bottom of the container is extended outside the rear wall thereof and functions as a slide chute. A pivot arm is herein mounted close to the upper side of the container, which arm has a telescopically extensible part on which a loading flap is suspended. By means of this loading flap a bale of material can slide via the chute into the container. Here also the bale of material is introduced into the container at the bottom.

The invention now has for its object to provide an apparatus of the above described type with an improved loading. According to the invention this is achieved in that the loading means comprise a support member connected to the container via at least one pivot arm mounted close to the underside of the container. By making use of a support member, such as a scoop which is supported by a pivot arm or two pivot arms which is or are mounted close to the underside of the container, the bale of material can be placed into the container close to the top, where it falls onto the rotatable shredding members. A more effective loading thus becomes possible.

The prior art document DE-U-8715555 relates to a mixing device for loose material, including a mixing chamber which is closed at its top by a flat, horizontal, rotating shredding plate. Above this shredding plate a cover with a loading opening is present. Loose material to be shredded is brought through the loading opening to the shredding plate by a loading scoop pivotable on arms. The disclosed arrangement is unsuitable for shredding bales of material.

Preferred embodiments of the apparatus according to the invention are descried in the dependent claims.

The invention is now elucidated on the basis of an embodiment, wherein reference is made to the annexed drawing, in which:
fig. 1 shows a partly cut-away perspective view of a first embodiment of the apparatus according to the invention,
fig. 2 shows schematically the placing in the loading means of a bale of material to be shredded,
fig. 3 shows the tilting of the bale of material into the container of the apparatus by the loading means,
fig. 4 shows the pulling of a bale of material from a stack, and

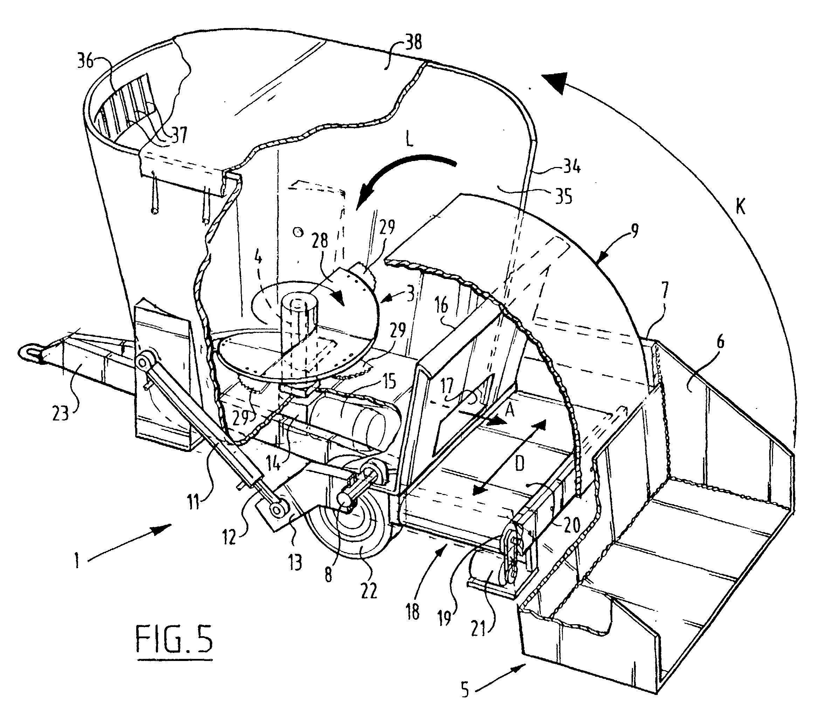

fig. 5 is a view corresponding with fig. 1 of an alternative embodiment of the apparatus.

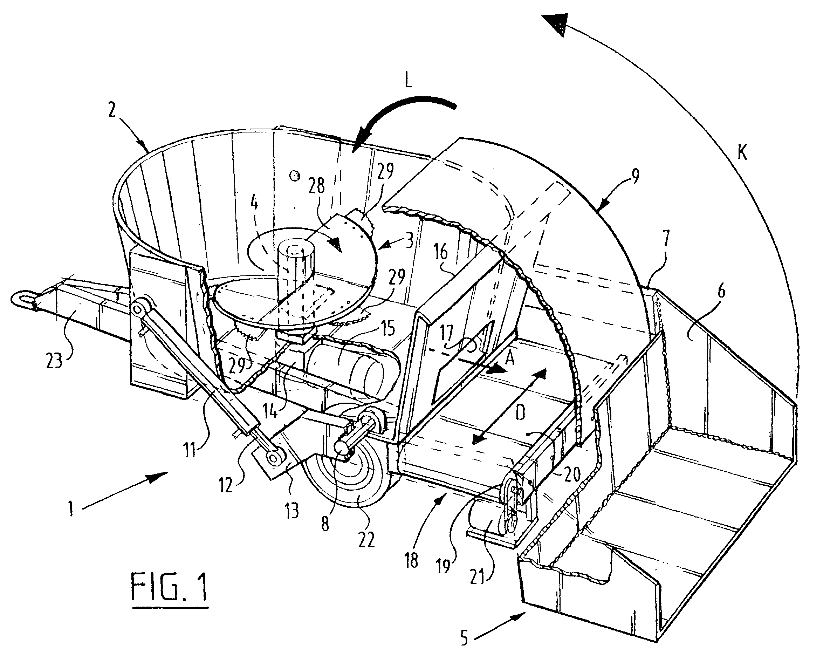

An apparatus 1 for shredding bales of material comprises a container or tub 2 with a shredding member 3 arranged rotatably therein, in the shown example in the form of a vertical screw 28 with a plurality of cutting edges 29 (fig. 1). Shredding member 3 is rotatable on a standing shaft 4 and is driven by means of a motor 15 via a transmission 14 in the direction of the arrow R.

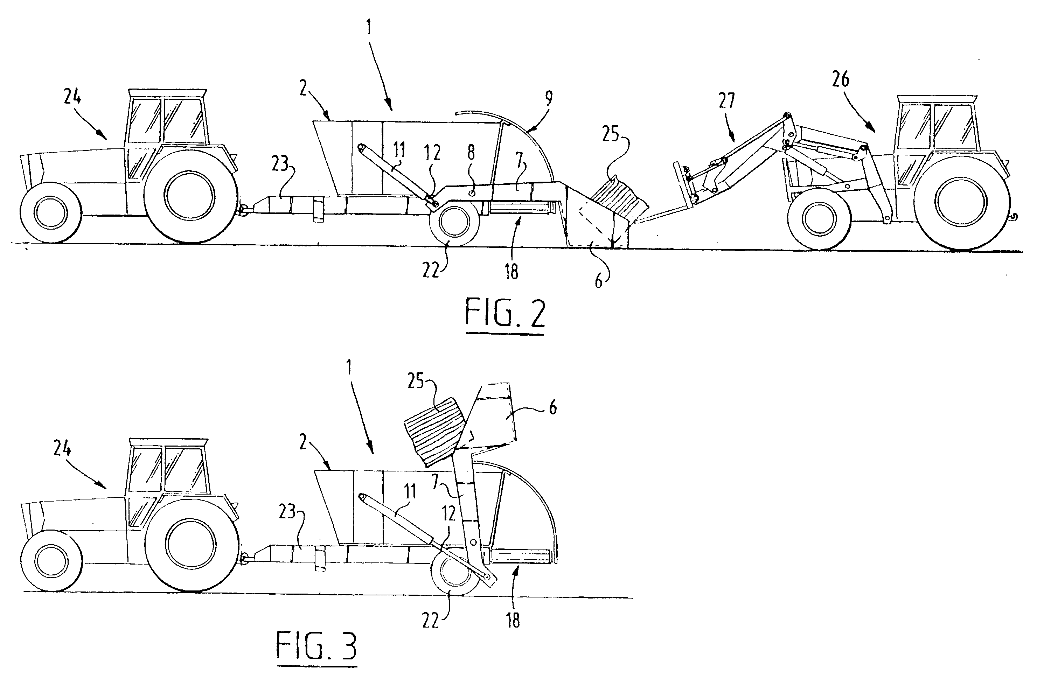

For loading of the tub 2 with the material for shredding the apparatus 1 is provided with loading means 5, which are adapted to perform a tilting movement as according to arrow K between a receiving position (fig. 2) and a delivery position (fig. 3). The loading means 5 are formed by a scoop 6, which is supported by two arms 7 which are pivotable on a shaft 8. A fork or other support member can for instance be used instead of a scoop. The pivot movement is driven by hydraulic drive means 10 in the form of a cylinder 11, which is connected to tub 2, and a piston 12 moveable therein which is connected to an outer end 13 of pivot arm 7. Scoop 6 is further moveable along guide means 9 in the form of an arcuate guide plate, which also serves as protection for discharge means 18 to be discussed below.

In an alternative embodiment of the apparatus 1 the walls of the tub 2, except for the rear wall 16 are raised, so that the volume of the tub 2 is increased. An opening 35 is thus formed between the rear edges 34 of the raised sidewalls and the top of the guide place 9, which may be closed off by scoop 6 when the apparatus 1 is filled with fodder and the shredding member 3 is operative. To allow the user, who will generally be seated on the tractor 24 in front of the apparatus 1, to check the operation of the apparatus 1 and especially the loading thereof, a window 36 which may for instance be covered by a bar grate 37 is arranged in the front of the raised sections of the sidewalls. In this embodiment the apparatus 1 may further be provided with a releasable cover, for instance in the shape of a tarpaulin 38.

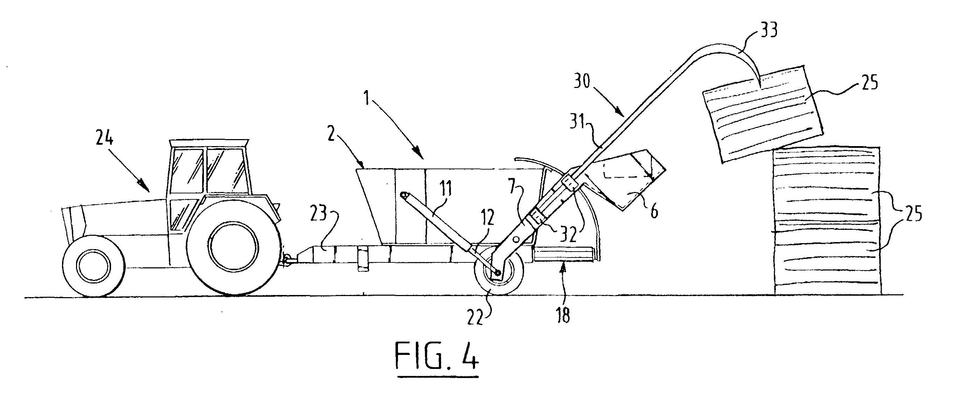

The apparatus 1 can further be provided with moveable hooking means 30 for handling the bales of material for shredding (fig. 4). These hook means 30 can be connected to pivot arms 7 and be retracted and extended therealong. For this purpose the hooking means 30 each comprise for instance a rod part 31 which is received slidably in slide bearings 32 on pivot arm 7 and which is provided on its end with an actual hook 33. For shifting of rod part 31 along pivot arm 7 use can be made of a mechanical rack-and-pinion drive. It is also possible to embody rod part 31 telescopically and cause it to be driven by one or more hydraulic cylinders. Rod part 32 could also be replaced by a hydraulic cylinder.

In the rear wall 16 of tub 2 is arranged an opening 17 through which the shredded material can be discharged as according to arrow A. Opening 17 connects onto the discharge means 18, which takes the form of a conveyor 20 which runs over reversing rollers 19 and can be driven by means of a motor 21 in two different directions as according to the arrow D.

The apparatus 1 is further provided with wheels 22 and with a pole 23 with which it can be suspended behind a tractor 24.

Before use the apparatus 1 is loaded with a bale of material 25, which is placed for instance by a second tractor 26 on the scoop 6 using a fork 27. Bale 25 can herein first be pulled from a stack of similar bales by using the hook means 30. Loading can otherwise also be carried out by the apparatus 1 simply by moving tractor 24 in the direction of scoop 6, whereby scoop 6 is pushed beneath bale 25. Scoop 26 is subsequently tilted, whereby bale 25 is scooped up and drops into tub 2 as according to arrow L. Bale 25 is thus introduced into tub 2 above the shredding member 3. By now causing shredding member 3 to rotate the bale is shredded. The shredded material, generally cattle fodder, is then carried through opening 17 to conveyor 20 and discharged to the side of apparatus 1. The apparatus 1 is herein pulled by tractor 24 along the cattle feed-troughs so that the shredded feed is thrown into the troughs. By reversing the rotation direction D of conveyor 20 feed-troughs on both sides of the apparatus 1 can be filled,

Because use is made of a shredding member 3 rotating on a standing shaft 4, apparatus 1 is suitable for shredding or cutting many different materials, irrespective of their form. Square or round bales can thus be processed, but also for instance cut silage blocks or even loose products. In addition, the shredding member 3 rotatable on standing shaft 4 is also suitable for operation as mixing member. By rotating shredding member 3 the shredded material is in any case also set into rotation and moreover moved in vertical direction as a result of the helical form of shredding member 3, so that other materials can be admixed in simple manner. Thus for instance the silage can be supplemented with extra nutrients. Owing to the tiltable loading means 5 the apparatus can be loaded quickly, whereby it can operate extremely efficiently. The guide means 9 herein prevent parts of the not yet shredded material 25 already coming to lie on discharge means 18.

## Claims

1. Apparatus (1) for shredding bales (25) of material, provided with a container (2) with at least one shredding member (3) arranged therein for rotation on a standing shaft (4) and loading means (5) driven by drive means (10) and tiltable between a receiving position and a delivery position for loading the container (2) with the bales (25), **characterized in that** the at least one shredding member (3) is in the form of a vertical screw and is journalled at one end only on the bottom of the container (2) and **in that** the loading means (5) comprise a support member (6) connected to the container (2) via at least one pivot arm (7) having its pivot shaft (8) mounted close to the underside of the container (2), said loading means (5) being arranged for placing the bales (25) into the container (2) close to its top.

2. Shredding apparatus as claimed in claim 1, **characterized in that** the support member (6) is carried by two pivot arms (7) arranged on either side of the container (2).

3. Shredding apparatus as claimed in claim 1 or 2, **characterized by** guide means (9) co-acting with the loading means (5).

4. Shredding apparatus as claimed in claim 3, **characterized in that** the guide means (9) comprise at least one arcuate guide member.

5. Shredding apparatus as claimed in claim 4, **characterized in that** the container (2) is connected to discharge means (18) arranged under the guide member (9).

6. Shredding apparatus as claimed in claim 5, **characterized in that** the discharge means (18) comprise a belt conveyor (20) running parallel to the shaft (8) of the pivot arm (7).

7. Shredding apparatus as claimed in any of the foregoing claims, **characterized in that** the drive means are hydraulic drive means (10) co-acting with the pivot arm (7).

8. Shredding apparatus as claimed in any of the foregoing claims, **characterized by** movable hooking means (30).

9. Shredding apparatus as claimed in claim 8, **characterized in that** the hooking means (30) are connected to the pivot arm (7) and slidable therealong.

## Patentansprüche

1. Apparat (1) zum Schreddern bzw. Zerkleinern von Materialballen (25), welcher mit einem Container bzw. Behälter (2) mit mindestens einem Zerkleinerungsteil bzw. -glied (3) versehen ist, welches darin zum Rotieren bzw. Drehen auf bzw. an einer stehenden Welle bzw. Schaft (4) angeordnet ist, und Lademittel (5), welche durch Antriebsmittel (10) angetrieben werden und schwenk- bzw. kipp- bzw. neigbar zwischen einer Aufnahmeposition und einer Lieferposition zum Beladen des Containers (2) mit den Ballen (25) sind, **dadurch gekennzeichnet, daß** das mindestens eine Zerkleinerungsglied (3) in Form einer vertikalen Schraube ist bzw. ausgebildet ist und an nur einem Ende auf dem Boden bzw. Unterseite des Containers (2) gelagert ist, und daß das bzw. die Lademittel (5) ein Stütz- bzw. Unterstützungsteil bzw. -glied (6) aufweisen, welches mit dem Behälter (2) über mindestens einen Schwenkarm (7) verbunden ist, dessen Schwenkwelle bzw. -achse (8) nahe an der Unterseite des Containers (2) montiert ist, wobei die Lademittel (5) zum Plazieren der Ballen (25) in den Container (2) nahe seiner oberen Seite angeordnet sind.

2. Zerkleinerungsapparat nach Anspruch 1, **dadurch gekennzeichnet, daß** das Stützglied (6) durch zwei Schwenkarme (7) getragen wird, welche auf irgendeiner bzw. beiden Seiten des Containers (2) angeordnet sind.

3. Zerkleinerungsapparat nach Anspruch 1 oder 2, **gekennzeichnet durch** Führungsmittel (9), welche mit den Lademitteln (5) mit- bzw. zusammenwirken.

4. Zerkleinerungsapparat nach Anspruch 3, **dadurch gekennzeichnet, daß** die Führungsmittel (9) mindestens ein gebogenes bzw. bogenförmiges Führungsglied aufweisen.

5. Zerkleinerungsapparat nach Anspruch 4, **dadurch gekennzeichnet, daß** der Container (2) mit Auslaßmitteln (18) verbunden ist, welche unter dem Führungsglied (9) angeordnet sind.

6. Zerkleinerungsapparat nach Anspruch 5, **dadurch gekennzeichnet, daß** die Auslaßmittel (18) einen Band- bzw. Gurtförderer (20) aufweisen, welcher parallel zu der Welle (8) des Schwenkarms (7) läuft.

7. Zerkleinerungsapparat nach einem der vorhergehenden Ansprüche, **dadurch gekennzeichnet, daß** die Antriebsmittel hydraulische Mittel (10) sind, welche mit dem Schwenkarm (7) mit- bzw. zusammenwirken.

8. Zerkleinerungsapparat nach einem der vorhergehenden Ansprüche, **gekennzeichnet durch** bewegliche hakenförmige Mittel (30).

9. Zerkleinerungsapparat nach Anspruch 8, **dadurch gekennzeichnet, daß** die Hakenmittel (30) mit dem Schwenkarm (7) verbunden sind und dort entlang gleit- bzw. rutschbar sind.

## Revendications

1. Appareil (1) pour déchiqueter des balles (25) de matériau, doté d'un récipient (2) avec au moins un élément déchiqueteur (3) agencé à l'intérieur du récipient pour une rotation sur un arbre vertical (4) et des moyens de chargement (5) menés par des moyens d'entraînement (10) et inclinables entre une position de réception et une position de délivrance pour charger le récipient (2) avec les balles (25), **caractérisé en ce que** l'un au moins des éléments déchiqueteurs (3) revêt la forme d'une hélice verticale montée sur le fond du récipient (2) par une seule extrémité au moyen d'un tourillon, et **en ce que** les moyens de chargement (5) comprennent un élément de support (6) connecté au récipient (2) par le biais d'au moins un bras pivotant (7) ayant son axe de pivotement (8) monté à proximité de la face inférieure du récipient (2), lesdits moyens de chargement (5) étant agencés pour placer les balles (25) dans le récipient (2) à proximité de son sommet.

2. Appareil à déchiqueter selon la revendication 1, **caractérisé en ce que** l'élément de support (6) est porté par deux bras pivotants (7) agencés de chaque côté du récipient (2).

3. Appareil à déchiqueter selon la revendication 1 ou 2, **caractérisé par** des moyens de guidage (9) qui coopèrent avec les moyens de chargement (5).

4. Appareil à déchiqueter selon la revendication 3, **caractérisé en ce que** les moyens de guidage (9) comprennent au moins un élément de guidage en forme d'arc.

5. Appareil à déchiqueter selon la revendication 4, **caractérisé en ce que** le récipient (2) est connecté à des moyens de déchargement (18) agencés sous l'élément de guidage (9).

6. Appareil à déchiqueter selon la revendication 5, **caractérisé en ce que** les moyens de déchargement (18) comprennent une courroie transporteuse (20) qui fonctionne parallèlement à l'arbre (8) du bras pivotant (7).

7. Appareil à déchiqueter selon l'une quelconque des revendications précédentes, **caractérisé en ce que** les moyens d'entraînement sont des moyens d'entraînement hydrauliques (10) qui coopèrent avec le bras pivotant (7).

8. Appareil à déchiqueter selon l'une quelconque des revendications précédentes, **caractérisé par** des moyens d'accrochage mobiles (30).

9. Appareil à déchiqueter selon la revendication 8, **caractérisé en ce que** les moyens d'accrochage (30) sont connectés au bras pivotant (7) et peuvent coulisser le long de celui-ci.
